# DEMANDE DE BREVET EUROPEEN

(11) **EP 2 169 903 A1**
(43) Date de publication de la demande: **31.03.2010**
(21) Numéro de dépôt: 09170203.5
(22) Date de dépôt: 14.09.2009
(51) Int. Cl.: H04L 29/06

(54) **Dispositif et procédé de routage permettant des traductions d'adresses en cascade dans un réseau**

(30) Priorité: 30.09.2008 FR 0856543
(71) Demandeur: FRANCE TELECOM, 75015 Paris (FR)
(72) Inventeur: Corbel, Régis, 22300 Lannion (FR)
(74) Mandataire: Delumeau, François Guy

(57) **Abrégé**

Ce dispositif de routage (100) comporte :
- des moyens (15) pour exécuter une fonction de traduction entre au moins une adresse d'un premier réseau (RLD) et au moins une adresse d'un deuxième réseau ; et
- des moyens (14) de réception d'une requête (RQ1) d'association en provenance d'un terminal (T1) du premier réseau (RLD);
- des moyens (11) pour générer une deuxième requête (RQ2) en substituant une adresse source dans la requête (RQ1) d'association par une adresse du dispositif de routage (100) sur le deuxième réseau ;
- des moyens (14) d'envoi de la deuxième requête (RQ2) à un serveur (FAI) de traduction d'adresse du deuxième réseau ;
- des moyens (14) pour transmettre au terminal (T1), en réponse à la requête (RQ1) d'association, une réponse (RP1) reçue du serveur (FAI) de traduction d'adresse en réponse à l'envoi de la deuxième requête (RQ2).

## Description

### Arrière-plan de l'invention

La présente invention se situe dans le domaine du routage et plus particulièrement dans celui-ci des mécanismes de traduction d'adresse dans les réseaux de télécommunications.

On rappelle en premier lieu que les mécanismes ou fonctions de traduction d'adresse (fonction NAT "Network Adress Translation") sont classiquement mis en oeuvre par des passerelles domestiques pour traduire des adresses privées du réseau domestique en adresses publiques du réseau Internet, et inversement.

A ce jour, le protocole qui forme la base de l'Internet est le protocole IPV4 (Internet Protocol Version 4) décrit dans le document RFC791.

Ce protocole utilise une adresse IP sur 32 bits, ce qui limite l'expansion de l'Internet.

Cette limitation conduit à la transition d'IPV4 vers le protocole IPV6 (Internet Protocol Version 6) dont les adresses sont sur 128 bits.

Le déploiement du protocole IPV6 étant en pratique relativement lent, la présente invention vise une solution alternative à IPV6 pour répondre au problème de pénurie d'adresse d'IVP4.

Bien entendu, la présente invention ne se limite pas au protocole IPV4 et pourrait tout à fait être utilisée dans le contexte du protocole IPV6.

Par ailleurs, il est connu que de nombreux services (partage des fichiers de pair à pair, réseau de voix sur IP, ....) nécessitent d'établir des connexions entrantes, c'est-à-dire du réseau Internet vers le réseau domestique.

La présente invention se fixe comme contrainte de pouvoir accepter de tels services.

### Objet et résumé de l'invention

Selon un premier aspect, l'invention vise un dispositif de routage comportant :
- des moyens pour exécuter une fonction de traduction entre au moins une adresse d'un premier réseau et au moins une adresse d'un deuxième réseau ;
- des moyens de réception d'une requête d'association en provenance d'un terminal du premier réseau ;
- des moyens pour générer une deuxième requête en substituant une adresse source dans la requête d'association, par une adresse du dispositif de routage sur le deuxième réseau ;
- des moyens d'envoi de la deuxième requête à un serveur de traduction d'adresse du deuxième réseau ; et
- des moyens pour transmettre au terminal, en réponse à la requête d'association, une réponse reçue en provenance du serveur de traduction d'adresse en réponse à l'envoi de la deuxième requête.

Corrélativement l'invention vise un procédé de routage apte à exécuter une fonction de traduction entre au moins une adresse d'un premier réseau et au moins une adresse d'un deuxième réseau, ce procédé comportant :
- une étape de réception d'une requête d'association en provenance d'un terminal du premier réseau ;
- une étape de génération d'une deuxième requête en substituant une adresse source dans la requête d'association par une adresse du dispositif de routage sur le deuxième réseau ;
- une étape d'envoi de la deuxième requête à un serveur de traduction d'adresse du deuxième réseau ; et
- une étape de transmission au terminal, en réponse à la requête d'association, d'une réponse reçue du serveur de traduction d'adresse en réponse à l'envoi de la deuxième requête.

Dans ce document, une "requête d'association" est une requête pour associer un couple (adresse interne, port) avec un couple (adresse externe, port) comme d'usage dans les mécanismes de traduction d'adresses, cette association étant utilisée pour les connexions entrantes, c'est-à-dire dirigées du deuxième réseau vers le premier réseau.

Dans un mode particulier de mise en oeuvre de l'invention, le dispositif et/ou le procédé de routage selon l'invention sont embarqués dans une passerelle domestique.

Une mise en oeuvre particulière de l'invention permet d'économiser l'espace d'adressage IPV4 en cascadant les fonctions NAT, en attribuant une adresse IPV4 privée à la passerelle domestique, la fonction NAT de la passerelle domestique étant placée, derrière un autre équipement NAT par exemple du fournisseur d'accès au réseau Internet.

On rappelle que dans l'état actuel de la technique, l'usage est d'attribuer une adresse IPV4 publique aux passerelles domestiques. Dans cette mise en oeuvre particulière de l'invention, une seule adresse IPV4 publique peut être utilisée pour desservir plusieurs centaines d'utilisateurs finaux.

Il est essentiel, pour la mise en oeuvre de l'invention, que le dispositif de routage recevant une enquête d'association, remplace l'adresse source comprise dans cette requête par sa propre adresse, avant de l'envoyer au serveur NAT de l'étage supérieur, sans quoi, ce serveur bloquerait toute requête entrante.

Ainsi, grâce à l'invention, une demande d'association en provenance d'un terminal du réseau domestique accueillie au niveau de la passerelle domestique, relayée vers le serveur de traduction d'adresse du réseau Internet après substitution d'adresse source, permet de redescendre, vers le terminal, les réponses générées par le serveur de traduction d'adresse.

L'invention peut être mise en oeuvre avec une cascade à deux niveaux.

Bien entendu, le dispositif de routage selon l'invention peut être mise en oeuvre pour constituer une cascade à plus de deux étages.

Dans un mode particulier de l'invention, les moyens de génération de la deuxième requête sont aptes à sélectionner, et à insérer dans la deuxième requête, un port d'écoute du dispositif de routage disponible sur l'interface du deuxième réseau.

Cette caractéristique permet avantageusement d'éviter un conflit qui pourrait se produire lorsque deux terminaux du premier réseau envoient une requête d'association au dispositif de routage selon l'invention.

Dans un mode particulier de l'invention, le dispositif de routage comporte une pile UPnP, celle-ci comportant :
- les moyens pour recevoir la requête d'association ;
- les moyens pour générer et envoyer la deuxième requête au serveur de traduction d'adresse ; et
- les moyens pour recevoir une réponse de ces serveurs et la transmettre au terminal.

Selon cet aspect, l'invention propose d'étendre le protocole UPnP-IGD pour supporter une cascade de NAT, cette solution permettant au client de conserver une qualité de service équivalente à celle dont il dispose aujourd'hui.

On notera qu'aucune des solutions connues pour traverser les NAT (Tunnels, STUN: Simple Traversal of UDPT through NAT, Turn:Traversal Using Relay NAT, UPnP-IGD) ne permet de cascader plusieurs NAT.

L'invention peut être mise en oeuvre avec un protocole autre que UPnP, et notamment avec le protocole NAT-PMP (NAT Port Mapping Protocol) décrit dans le document *"*NAT Port Mapping Protocol (NAT PMP)", draft-cheshire-nat-pmp-03.txt, Stuart Cheshire et al., 16 avril 2008*.*

Dans un mode particulier de réalisation, les différentes étapes du procédé de routage sont déterminées par des instructions de programme d'ordinateurs.

En conséquence, l'invention vise aussi un programme d'ordinateur sur un support d'informations, ce programme étant susceptible d'être mis en oeuvre dans un dispositif de routage ou plus généralement dans un ordinateur, ce programme comportant des instructions adaptées à la mise en oeuvre des étapes d'un procédé de routage tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente, dans son environnement, une passerelle domestique conforme à un mode particulier de réalisation de l'invention ;
- la figure 2 représente des messages de contrôle pouvant être utilisés dans une mise en oeuvre particulière de l'invention ;
- la figure 3 représente, sous forme d'organigramme, les principales étapes d'un procédé de routage conforme à l'invention, dans un mode particulier de l'invention ; et
- les figures 4 et 5 représentent, de façon schématique, des tables de traduction d'adresse au support de la figure 1.

### Description détaillée d'un mode de réalisation

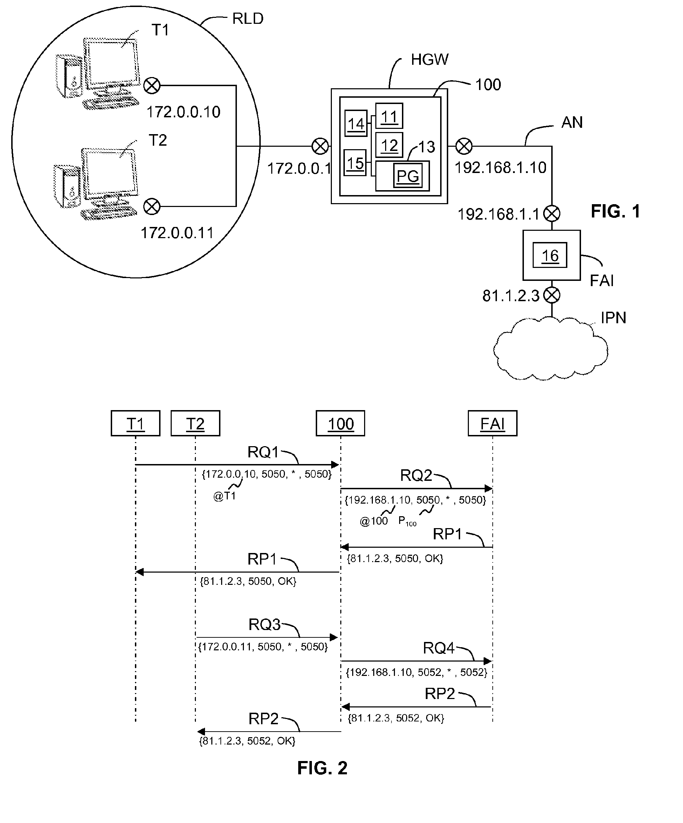

La **figure 1** représente, dans son environnement, une passerelle domestique HGW conforme à un mode particulier de réalisation de l'invention.

Cette passerelle HGW comporte un dispositif de routage 100 conforme à un mode particulier de réalisation de l'invention.

Dans l'exemple décrit ici, la passerelle domestique HGW constitue l'interface entre un réseau local domestique RLD et un réseau d'accès AN.

Sur cette figure 1, on a également représenté un serveur FAI de traduction d'adresse mis en oeuvre par un fournisseur d'accès placé entre le réseau d'accès AN précité et un backbone du réseau Internet IPN.

Dans l'exemple décrit ici, le réseau local domestique RLD comporte deux terminaux T1 et T2 connectés à la passerelle domestique HGW.

Dans l'exemple de réalisation décrit ici, le dispositif de routage 100 selon l'invention a l'architecture matérielle d'un ordinateur. Il comporte notamment un processeur 11, une mémoire vive de type RAM 12, une mémoire morte de type ROM 13 et des moyens de communication 14.

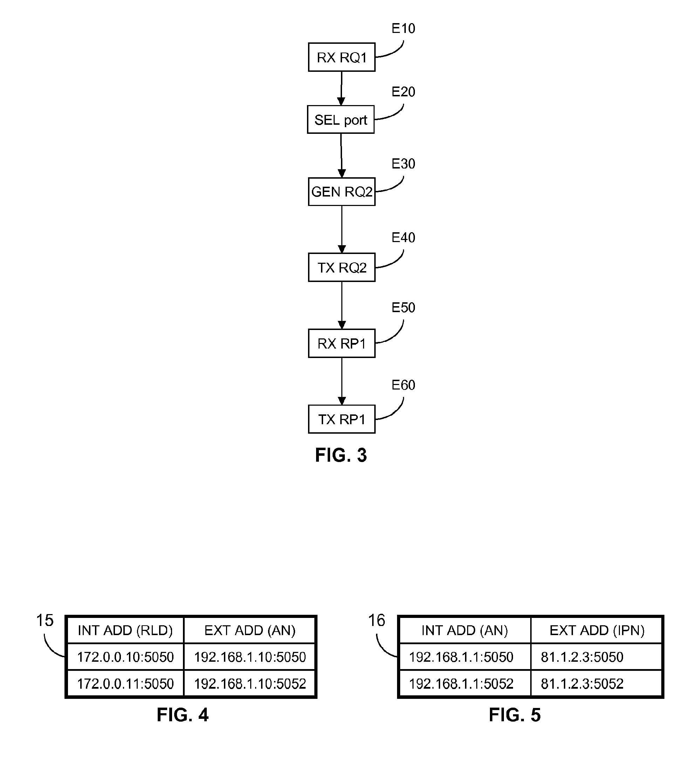

Il comporte également une table 15 de traduction d'adresse, celle-ci étant représentée à la figure 4.

La mémoire morte 13 constitue un support d'enregistrement conforme à l'invention sur lequel est enregistré un programme d'ordinateur PG, celui-ci comprenant des instructions pour exécuter les étapes d'un procédé de routage selon l'invention représenté schématiquement sous forme d'organigramme à la figure 3.

En référence aux **figures 2** **et** **3****,** nous allons maintenant décrire le fonctionnement de la passerelle domestique HGW, lorsqu'elle reçoit successivement deux requêtes RQ1, RQ2 d'association respectivement en provenance du terminal T1 puis du terminal T2.

Nous supposerons que le terminal T1 a pour adresse Internet privée dans le réseau local domestique RLD l'adresse 172.0.0.10 (référencée @T1 sur la figure 1), et qu'il souhaite écouter, sur son port 5050 les connexions entrantes en provenance du port 5050 de n'importe quelle adresse IP.

Cette requête d'association RQ1 est reçue par le dispositif de routage 100 conforme à l'invention au cours d'une étape E10 du procédé de routage selon l'invention.

Sur réception de cette requête RQ1, le dispositif de routage 100 sélectionne, au cours d'une étape E20 un port d'écoute P₁₀₀ disponible, en l'espèce le port 5050.

Puis, au cours d'une étape E30, il génère une deuxième requête RQ2 dans laquelle il remplace le couple (adresse, port) source compris dans la requête RQ1 par le couple (@100, P₁₀₀) où :
- @100 est l'adresse IP 192.168.1.10 du dispositif de routage 100 sur le réseau AN ; et
- P₁₀₀ est le port disponible 5050 sélectionné à l'étape E20.

Le dispositif de routage 100 selon l'invention envoie la requête RQ2 au serveur FAI de traduction d'adresse au cours d'une étape E40.

Nous supposerons dans cet exemple que le port 5050 du serveur FAI est libre, et que celui-ci répond à la requête RQ2 par l'envoi d'un message de réponse RP1, ce message étant reçu par le dispositif de routage 100 au cours d'une étape E50.

Conformément à l'invention, le dispositif de routage 100 transmet le message de réponse RP1 sans modifications au terminal T1 au cours d'une étape E60.

A la suite de RQ1, RQ2 (qui ont engendré la réponse RP1) :
- le terminal T1 (172.0.0.10) écoute les connexions entrantes sur le port 5050 ;
- la passerelle domestique HGW écoute les connexions entrantes sur son interface externe (192. 168.1.10) destinées au port 5050 ; et
- le serveur FAI d'adresse externe ipv4 publique 81.1.2.3 écoute les demandes de connexions entrantes sur le port 5050 ; si une telle connexion lui parvient, il exécute cette demande et relaie la connexion vers l'interface externe 192.168.1.10 de la passerelle domestique HGW, sur le port 5050 ; à son tour, cette dernière fera suivre la demande vers le terminal T1 du réseau local domestique, c'est-à-dire à l'adresse 172.0.0.10:5050.

Nous supposons maintenant que le terminal T2 émet une requête RQ3 d'association, c'est-à-dire qu'il se met en attente de connexions sur 172.0.0.11:5050.

Cette demande parvient à la passerelle domestique HGW qui effectue une substitution d'adresse (E30) puis la relaie (E40, requête RQ4) au serveur FAI pour lui indiquer qu'elle attend les connexions en provenance de l'Internet, sur l'adresse 192. 168. 1. 10, port 5052.

En effet, le port 5050 étant déjà en écoute sur l'interface externe de la passerelle suite à l'exécution de RQ1, la passerelle HGW est obligée d'en choisir un autre.

La requête RQ4 reçue par le serveur FAI est alors dans cet exemple de la forme {192. 168.1.10, 5052, *, 5052}.

Le serveur FAI reçoit donc la requête RQ4, la traite et renvoie la réponse RP2 = {81.1.2.3, 5052, OK} à la passerelle HGW. Cette dernière reçoit cette réponse RP2 (étape E50) et se contente de la retransmettre (étape E60) au terminal T2.

Bien entendu, si le serveur FAI avait détecté que le port 5052 était déjà en écoute, il aurait renvoyé une réponse {81.1.2.3, 5054, OK} en appliquant la règle de parité du port alloué.

On constate, que le comportement des terminaux T1 et T2 est inchangé, ceux-ci étant en écoute sur le même port dans le réseau local RLD.

Mais, grâce à l'invention, les requêtes en provenance du réseau Internet IPN sont routées vers les bons terminaux. En effet, en se connectant depuis le réseau IPN à l'adresse 81.2.3 : 5050, on atteint le terminal T1, et en se connectant à l'adresse 81.2.3 : 5052, on atteint le terminal T2.

Il est préférable que les terminaux T1 et T2 reçoivent les réponses RP1 et RP2 à leur requête respective RQ1, RQ2 pour pouvoir les publier à l'extérieur.

Par exemple, si le terminal T2 incorpore un serveur Web, il communiquera le couple port/adresse (81.1.2.3, 5052) pour que les clients Web du réseau Internet IPN puissent y accéder.

Les **figures 4 et 5** représentent respectivement les tables de traduction d'adresse 15 et 16 du dispositif 100 de routage selon l'invention et du serveur FAI de traduction d'adresse après l'échange des messages de contrôle de la figure 2.

Ainsi, si un client Web du réseau internet IPN souhaite accéder au serveur Web du terminal T2, il émettra une requête à l'adresse 81.1.2.3:5052, celle-ci étant traduite par le serveur FAI en 182.168.1.1:5052.

La requête sera alors reçue par le dispositif de routage 100 et réémise sur son port 5050.

Elle sera donc reçue par le terminal T2 sur son port 5051, tel qu'il l'avait demandé dans sa requête d'association RQ3.

## Revendications

1. Dispositif de routage (100) comportant :
- des moyens (15) pour exécuter une fonction de traduction entre au moins une adresse d'un premier réseau (RLD) et au moins une adresse d'un deuxième réseau (AN) ; et
- des moyens (14) de réception d'une requête (RQ1) d'association en provenance d'un terminal (T1) dudit premier réseau (RLD); ce dispositif étant **caractérisé en ce qu'**il comporte :
- des moyens (11) pour générer une deuxième requête (RQ2) en substituant une adresse source (@T1) dans ladite requête (RQ1) d'association par une adresse (@100) dudit dispositif de routage (100) sur ledit deuxième réseau ;
- des moyens (14) d'envoi de la deuxième requête (RQ2) à un serveur (FAI) de traduction d'adresse dudit deuxième réseau ; et
- des moyens (14) pour transmettre audit terminal (T1), en réponse à ladite requête (RQ1) d'association, une réponse (RP1) reçue dudit serveur (FAI) de traduction d'adresse en réponse à l'envoi de ladite deuxième requête (RQ2).

2. Dispositif de routage selon la revendication 1, **caractérisé en ce que** lesdits moyens (11) de génération de ladite deuxième requête sont aptes à sélectionner, et à insérer dans la deuxième requête (RQ2), un port d'écoute (P₁₀₀) dudit dispositif (100) de routage disponible sur l'interface dudit deuxième réseau (AN).

3. Dispositif de routage (100) selon la revendication 1 ou 2, **caractérisé en ce qu'**il comporte une pile UPnP comportant :
- lesdits moyens (14) de réception de la requête d'association ;
- lesdits moyens (11) de génération et d'envoi de ladite deuxième requête (RQ2) ;
- lesdits moyens (14) de réception et de transmission de ladite réponse (RP1).

4. Passerelle domestique (HGW) comportant un dispositif de routage (100) selon l'une quelconque des revendications 1 à 3.

5. Procédé de routage pouvant être mis en oeuvre par un dispositif de routage (100) apte à exécuter une fonction de traduction entre au moins une adresse d'un premier réseau (RLD) et au moins une adresse d'un deuxième réseau (AN), ce procédé comportant :
- une étape (E10) de réception d'une requête (RQ1) d'association en provenance d'un terminal (T1) du premier réseau (RLD);
- une étape (E30) de génération d'une deuxième requête (RQ2) en substituant une adresse source (@T1) dans ladite requête (RQ1) d'association par une adresse (@100) dudit dispositif (100) de routage sur ledit deuxième réseau ;
- une étape (E40) d'envoi de la deuxième requête (RQ2) à un serveur (FAI) de traduction d'adresse dudit deuxième réseau ; et
- une étape (E60) de transmission audit terminal (T1), en réponse à ladite requête (RQ1) d'association, d'une réponse (RP1) reçue (E50) dudit serveur (FAI) de traduction d'adresse en réponse à l'envoi de ladite deuxième requête (RQ2).

6. Programme d'ordinateur (PG) comportant des instructions pour l'exécution des étapes du procédé de routage selon la revendication 5 lorsque ledit programme est exécuté par un ordinateur.

7. Support d'enregistrement (13) lisible par un ordinateur sur lequel est enregistré un programme d'ordinateur (PG) comprenant des instructions pour l'exécution des étapes du procédé de routage selon la revendication 5.
